# FASCICULE DE BREVET EUROPEEN

(11) **EP 1 155 894 B1**
(45) Date de publication et mention de la délivrance du brevet: **23.07.2003**
(21) Numéro de dépôt: 01401229.8
(22) Date de dépôt: 14.05.2001
(51) Int. Cl.: B60K 5/12, F16F 1/373, F16F 1/387

(54) **Support antivibratoire, et véhicule comportant un tel support**
Schwingungsdämpfendes Lager, und Fahrzeug mit einem solchen Lager
Damping support, and vehicle comprising such a support

(30) Priorité: 19.05.2000 FR 0006439
(43) Date de publication de la demande: 21.11.2001
(73) Titulaire: HUTCHINSON, 75008 Paris (FR)
(72) Inventeur: Larmande, Franck, 28200 Châteaudun (FR); Dandre, Jacques, 28200 La Chapelle du Noyer (FR); Petit, Pascal, 45380 Chaingy (FR)
(74) Mandataire: Burbaud, Eric

(56) Documents cités:
- EP-A- 0 965 473
- FR-A- 2 363 033
- US-A- 4 151 822

## Description

La présente invention est relative aux supports antivibratoires (destinés à supporter par exemple un moteur de véhicule automobile sur la caisse du véhicule) et aux véhicules comportant de tels supports.

Plus particulièrement, l'invention concerne un support antivibratoire destiné à relier entre eux des premier et deuxième éléments rigides pour supporter une charge axiale permanente appliquée entre ces premier et deuxième éléments rigides selon un premier axe et pour amortir des vibrations entre lesdits premier et deuxième éléments rigides, ce support antivibratoire comportant :
- des première et deuxième armatures rigides destinées à être reliées respectivement aux deux éléments rigides à réunir, la première armature comportant au moins un doigt limiteur qui s'étend selon un deuxième axe perpendiculaire au premier axe et qui est entouré au moins partiellement par une cage rigide appartenant à la deuxième armature, cette cage présentant une surface externe orientée à l'opposé du doigt limiteur et une surface interne orientée vers le doigt limiteur, laquelle surface interne est adaptée pour coopérer par butée avec ce doigt limiteur pour limiter des débattements relatifs entre les première et deuxième armatures selon ledit premier axe et selon un troisième axe perpendiculaire aux premier et deuxième axes, la première armature comportant au moins un organe de support qui présente une face d'appui orientée sensiblement selon le premier axe vers le doigt limiteur, et la cage rigide de la deuxième armature étant interposée entre ladite face d'appui et le doigt limiteur,
- et un dispositif de liaison en élastomère reliant la surface externe de la cage rigide à la surface d'appui de l'organe de support, le dispositif de liaison en élastomère étant adapté pour supporter ladite charge axiale permanente, et ledit dispositif de liaison en élastomère comportant deux bras qui s'étendent selon le premier axe à partir de la deuxième armature, en divergeant selon le troisième axe jusqu'à la première armature.

Le document générique US-A-4 151 822 décrit un exemple d'un tel support antivibratoire qui présente l'inconvénient d'être complexe et coûteux à réaliser.

La présente invention a notamment pour but de pallier cet inconvénient.

A cet effet, selon l'invention, un support antivibratoire du genre en question est caractérisé en ce que les deux bras du dispositif de liaison en élastomère sont reliés respectivement à deux doigts de support distincts appartenant à la première armature, ces doigts de support étant disposés longitudinalement parallèlement au deuxième axe et étant décalés de part et d'autre du doigt limiteur, les doigts de support et le doigt limiteur étant formés d'une seule pièce.

Dans des modes de réalisation préférés de l'invention, on peut éventuellement avoir recours en outre à l'une et/ou à l'autre des dispositions suivantes :
- la deuxième armature se présente sous la forme d'un arceau central prolongé latéralement vers l'extérieur par deux pattes de fixation destinées à être fixées au deuxième élément rigide, l'arceau central entourant partiellement le doigt limiteur ;
- le doigt limiteur comporte un enrobage d'élastomère ;
- la première armature est une pièce de fonderie en alliage léger ;
- la première armature comporte un corps doté de moyens de fixation adaptés pour fixer ledit corps au premier élément rigide, les doigts de support et le doigt limiteur étant formés d'une seule pièce avec ledit corps.

Par ailleurs, l'invention a également pour objet un véhicule automobile comportant une caisse reliée à un bloc motopropulseur au moins par l'intermédiaire d'un support antivibratoire, un premier élément parmi le bloc motopropulseur et la caisse étant fixé à la première armature et un deuxième élément parmi le bloc motopropulseur et la caisse étant fixé à la deuxième armature.

Avantageusement, la deuxième armature présente un arceau central qui se prolonge latéralement vers l'extérieur par deux pattes de fixation fixées respectivement au deuxième élément, le doigt limiteur étant adapté pour coopérer par butée avec l'arceau central et ledit deuxième élément afin de limiter les débattements relatifs entre les première et deuxième armatures parallèlement aux premier et troisième axes.

D'autres caractéristiques et avantages de l'invention apparaîtront au cours de la description suivante de d'une de ses formes de réalisation, donnée à titre d'exemple non limitatif, en regard des dessins joints.

Sur les dessins :
- la figure 1 est une vue en perspective d'un support antivibratoire selon une forme de réalisation de l'invention,
- la figure 2 est une vue en perspective du support antivibratoire de la figure 1, en coupe transversale verticale,
- et la figure 3 est une vue en coupe longitudinale verticale du support antivibratoire des figures 1 et 2.

Sur les différentes figures, les mêmes références désignent des éléments identiques ou similaires.

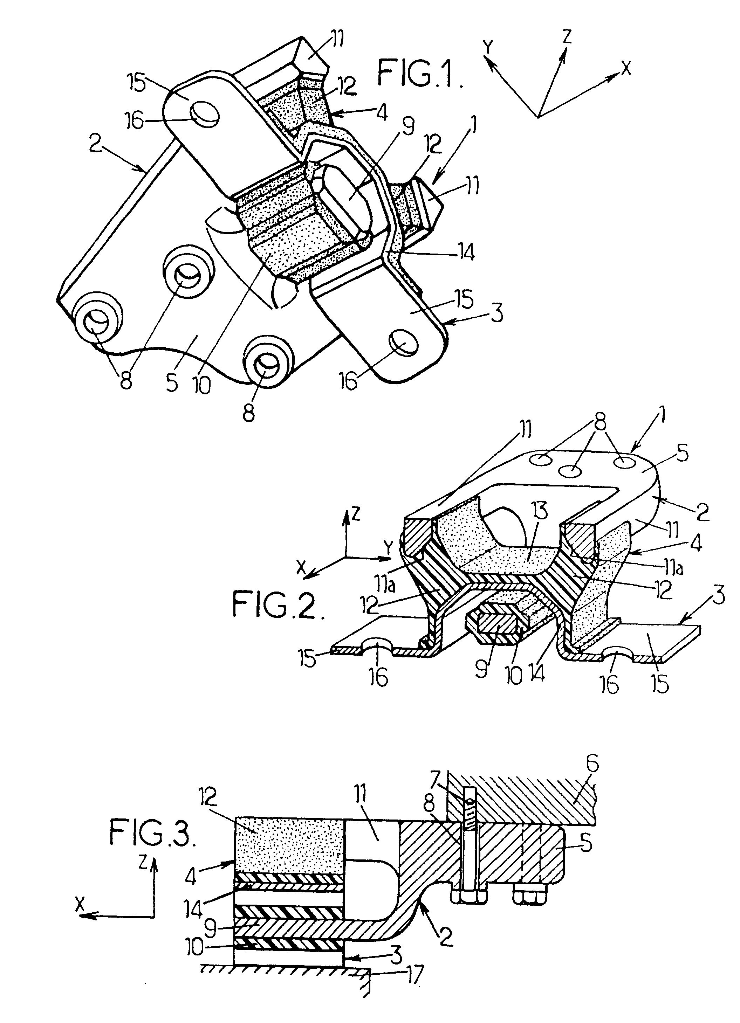

Le support antivibratoire représenté sur les figures 1 à 3 est destiné à supporter par exemple un bloc motopropulseur de véhicule sur la caisse du véhicule.

A cet effet, le support antivibratoire 1 comporte des première et deuxième armatures rigides 2, 3 qui sont destinées à être fixées respectivement au bloc motopropulseur et à la caisse du véhicule et qui sont reliées entre elles par un corps en élastomère 4 adapté pour supporter le poids du bloc motopropulseur et pour amortir des vibrations relatives entre le bloc motopropulseur et la caisse du véhicule. Dans l'exemple particulier représenté sur les dessins, la première armature 2 est fixée au bloc motopropulseur et la deuxième armature 3 à la caisse du véhicule, mais bien entendu, la disposition inverse serait également possible.

La première armature 2 se présente généralement sous la forme d'une pièce métallique rigide, réalisée par exemple sous la forme d'une pièce de fonderie en alliage léger, qui comprend :
- un corps 5 qui est destiné à être fixé à un corps rigide 6 solidaire du bloc motopropulseur du véhicule, par exemple au moyen de vis 7 qui traversent des alésages 8 percés dans le corps 5 parallèlement à l'axe vertical Z (figure 3),
- un doigt limiteur 9 rigide qui s'étend longitudinalement selon un axe horizontal X à partir du corps 5 et qui est de préférence entouré par un enrobage en élastomère 10,
- et deux organes de support 11 en forme de doigts qui s'étendent longitudinalement parallèlement à l'axe X à partir du corps 5, les doigts 11 étant disposés à un niveau supérieur au doigt limiteur 9, de part et d'autre d'un plan de symétrie vertical passant par le doigt 9.

Les doigts de support 11 présentent chacun une surface d'appui 11a, qui dans l'exemple représenté est orientée en biais vers le bas et vers le doigt limiteur 9. Sur chaque doigt de support 11 est surmoulé et adhérisé un bras 12 en élastomère appartenant au corps 4, l'extrémité supérieure de chaque bras 12 recouvrant au moins la surface d'appui 11a correspondante. Les deux bras 12 convergent l'un vers l'autre vers le bas, jusqu'à des extrémités inférieures ou lesdits bras 12 sont surmoulés et adhérisés sur la deuxième armature 3, et les extrémités inférieures de ces bras 12 sont en outre reliées l'une à l'autre par une couche d'élastomère 13 qui recouvre la partie supérieure de la deuxième armature 3. Bien entendu, les deux bras 12 pourraient le cas échéant être réalisés sous la forme de deux pièces d'élastomère séparées l'une de l'autre.

Par ailleurs, la deuxième armature 3 se présente sous la forme d'une plaque de tôle pliée qui forme un arceau central sensiblement en forme de U inversé, entourant le doigt limiteur 9 et sur lequel sont adhérisées les extrémités inférieures des deux bras 12 du corps en élastomère ainsi que la couche d'élastomère 13 susmentionnée.

L'arceau central 14 de la deuxième armature se prolonge latéralement vers l'extérieur, parallèlement à un axe horizontal Y perpendiculaire à l'axe X, par deux ailes 15 qui sont percées par exemple chacune d'un trou 16 permettant de fixer la deuxième armature à la caisse 17 du véhicule (figure 3) au moyen de vis ou similaire (non représentées).

Ainsi, le doigt limiteur 9 coopère par butée avec l'arceau 14 de la deuxième armature et avec la caisse 17 du véhicule pour limiter les débattements relatifs des première et deuxième armature 2, 3 selon les axes Y et Z.

## Revendications

1. Support antivibratoire destiné à relier entre eux des premier et deuxième éléments rigides (6, 17) pour supporter une charge axiale permanente appliquée entre ces premier et deuxième éléments rigides selon un premier axe (Z) et pour amortir des vibrations entre lesdits premier et deuxième éléments rigides, ce support antivibratoire comportant :
- des première et deuxième armatures rigides (2, 3) destinées à être reliées respectivement aux deux éléments rigides à réunir, la première armature comportant au moins un doigt limiteur (9) qui s'étend selon un deuxième axe (X) perpendiculaire au premier axe (Z) et qui est entouré au moins partiellement par une cage rigide (14) appartenant à la deuxième armature, cette cage présentant une surface externe orientée à l'opposé du doigt limiteur (9) et une surface interne orientée vers le doigt limiteur, laquelle surface interne est adaptée pour coopérer par butée avec ce doigt limiteur pour limiter des débattements relatifs entre les première et deuxième armatures (2, 3) selon ledit premier axe (Z) et selon un troisième axe (Y) perpendiculaire aux premier et deuxième axes (Z, X), la première armature (2) comportant au moins un organe de support (11) qui présente une face d'appui (11a) orientée sensiblement selon le premier axe (Z) vers le doigt limiteur (9), et la cage rigide (14) de la deuxième armature étant interposée entre ladite face d'appui et le doigt limiteur,
- et un dispositif de liaison en élastomère (4) reliant la surface externe de la cage rigide (14) à la surface d'appui (11a) de l'organe de support (11), le dispositif de liaison en élastomère étant adapté pour supporter ladite charge axiale permanente, et ledit dispositif de liaison en élastomère (4) comportant deux bras (12) qui s'étendent selon le premier axe (Z) à partir de la deuxième armature, en divergeant selon le troisième axe (Y) jusqu'à la première armature,
**caractérisé en ce que** les deux bras (12) du dispositif de liaison en élastomère sont reliés respectivement à deux doigts de support (11) distincts appartenant à la première armature, ces doigts de support étant disposés longitudinalement parallèlement au deuxième axe (X) et étant décalés de part et d'autre du doigt limiteur (9), les doigts de support (11) et le doigt limiteur (9) étant formés d'une seule pièce.

2. Support antivibratoire selon la revendication 1, dans lequel la deuxième armature (3) se présente sous la forme d'un arceau central (14) prolongé latéralement vers l'extérieur par deux pattes de fixation (15) destinées à être fixées au deuxième élément rigide (17), l'arceau central (14) entourant partiellement le doigt limiteur (9).

3. Support antivibratoire selon l'une quelconque des revendications 1 et 2, dans lequel le doigt limiteur (9) comporte un enrobage d'élastomère (10).

4. Support antivibratoire selon l'une quelconque des revendications précédentes, dans lequel la première armature (2) est une pièce de fonderie en alliage léger.

5. Support antivibratoire selon l'une quelconque des revendications précédentes, dans lequel la première armature (2) comporte un corps (5) doté de moyens de fixation (8) adaptés pour fixer ledit corps (5) au premier élément rigide (6), les doigts de support (11) et le doigt limiteur (9) étant formés d'une seule pièce avec ledit corps (5).

6. Véhicule automobile comportant une caisse (17) reliée à un bloc motopropulseur (6) au moins par l'intermédiaire d'un support antivibratoire (1) selon l'une quelconque des revendications précédentes, un premier élément (6) parmi le bloc motopropulseur et la caisse étant fixé à la première armature et un deuxième élément (17) parmi le bloc motopropulseur et la caisse étant fixé à la deuxième armature.

7. Véhicule selon la revendication 6, dans lequel la deuxième armature présente un arceau central (14) qui se prolonge latéralement vers l'extérieur par deux pattes de fixation (15) fixées respectivement au deuxième élément (17), le doigt limiteur (9) étant adapté pour coopérer par butée avec l'arceau central (14) et ledit deuxième élément (17) afin de limiter les débattements relatifs entre les première et deuxième armatures parallèlement aux premier et troisième axes (Z, Y).

## Patentansprüche

1. Schwingungsdämpfendes Lager zur Verbindung von ersten und zweiten steifen Elementen (6, 17) zum Tragen einer ständigen axialen Last, die zwischen den ersten und zweiten steifen Teilen gemäß einer ersten Achse (Z)angelegt ist und zum Dämpfen von Schwingungen zwischen den ersten und zweiten steifen Elementen, wobei das schwingungsdämpfende Lager aufweist:
erste und zweite steife Beschläge (2, 3), die jeweils mit einem von zwei zu vereinigenden steifen Elementen zu verbinden sind, wobei der erste Beschlag einen Begrenzerfinger (9) aufweist, der sich längs einer zweiten Achse (X) senkrecht zur ersten Achse (Z) erstreckt und der zumindest teilweise von einem steifen Käfig (14) umgeben ist, der zum zweiten Beschlag gehört, wobei der Käfig einen dem Begrenzerfinger (9) abgewande Außenseite und eine den Begrenzerfinger zugewandte Innenseite aufweist, wobei die Innenseite so ausgebildet ist, dass sie durch Anschlag mit dem Begrenzerfinger zusammenwirkt, um relative Federungswege zwischen erstem und zweitem Beschlag (2, 3) gemäß der ersten Achse (Z) und gemäß einer dritten Achse (Y) senkrecht zur ersten und zur zweiten Achse (Z, X) zu begrenzen, wobei der erste Beschlag (2) mindestens ein Tragglied (11) aufweist, das eine Anlagefläche (11a) besitzt, die im wesentlichen längs der ersten Achse (Z) zum Begrenzerfinger (9) gerichtet ist und wobei der steife Käfig (14) des zweiten Beschlages zwischen der Anlagefläche und dem Begrenzerfinger angeordnet ist,
eine aus elastomerem Material (4) bestehende Verbindungsanordnung, die die Außenseite des steifen Käfigs (14) mit der Anlagefläche (11a) des Traggliedes (11) verbindet, wobei die Verbindungsanordnung aus elastomerem Material so ausgebildet ist, dass sie die ständige axiale Last trägt und wobei die Verbindungseinrichtung aus elastomerem Material (4) zwei Arme (12) aufweist, die sich längs der ersten Achse (Z) erstrecken, ausgehend von dem zweiten Beschlag, wobei sie gemäß der dritten Achse (Y) bis zu dem ersten Beschlag divergieren,
**dadurch gekennzeichnet, dass** die beiden Arme (12) der Verbindungsanordnung aus elastomerem Material jeweils mit zwei getrennten Tragfingern (11) verbunden sind, die an dem ersten Beschlag vorgesehen sind, wobei die Tragfinger in Längsrichtung parallel zur zweiten Achse (X) angeordnet sind und beiderseits des Begrenzerfingers (9) versetzt sind, wobei die Tragfinger (11) und der Begrenzerfinger (9) einstückig ausgebildet sind.

2. Schwingungsdämpfendes Lager nach Anspruch 1, bei dem der zweite Beschlag (3) in Form eines zentralen Bogens (14) ausgebildet ist, der seitlich nach Außen durch zwei Befestigungsglieder (15) verlängert ist, die an dem zweiten festen Element (17) fixierbar sind, wobei der zentrale Bogen (14) teilweise den Begrenzerfinger (9) umgibt.

3. Schwingungsdämpfendes Lager nach einem der Ansprüche 1 oder 2, bei dem der Begrenzerfinger (9) eine Umhüllung aus elastomerem Material (10) aufweist.

4. Schwingungsdämpfendes Lager nach einem der vorhergehenden Ansprüche, bei dem der erste Beschlag (2) ein Gussteil aus einer Leichtmetall-Legierung ist.

5. Schwingungsdämpfendes Lager nach einem der vorstehenden Ansprüche, bei dem der erste Beschlag (2) einen Körper (5) aufweist, der mit Befestigungsmitteln (8) versehen ist, zur Befestigung des Körpers (5) am ersten steifen Element (6), wobei die Tragfinger (11) und der Begrenzerfinger (9) einstückig mit dem Körper (5) ausgebildet sind.

6. Kraftfahrzeug mit einem Gehäuse (17), dass mit einem Antriebsblock (6) durch zumindest ein schwingungsdämpfendes Lager (1) gemäß einem der vorstehenden Ansprüche verbunden ist, wobei ein erstes Element (6) von Antriebsblock oder Gehäuse an dem ersten Beschlag befestigt ist und wobei ein zweites Element (17) von Antriebsblock oder Gehäuse mit dem zweiten Beschlag verbunden ist.

7. Fahrzeug nach Anspruch 6, bei dem der zweite Beschlag einen zentralen Bogen (14) aufweist, der seitlich nach Außen durch zwei Befestigungsglieder (15) verlängert ist, die jeweils am zweiten Element (17) befestigt sind, wobei der Begrenzerfinger (9) zur Zusammenwirkung durch Anschlag mit dem zentralen Bogen (14) und dem zweiten Element (17) ausgebildet ist, um die relativen Federwege zwischen erstem und zweitem Beschlag parallel zu der ersten und der dritten Achse (Z, Y) zu begrenzen.

## Claims

1. An antivibration support for interconnecting first and second rigid elements (6, 17) to support a permanent axial load applied between said first and second rigid elements along a first axis (Z), and to damp vibration between said first and second rigid elements, the antivibration support comprising:
· first and second rigid strength members (2, 3) for connecting to the two rigid elements that are to be united, the first strength member having at least one limit finger (9) which extends along a second axis (X) perpendicular to the first axis (Z) and which is surrounded at least in part by a rigid cage (14) belonging to the second strength member, said cage having an outer surface facing away from the limit finger (9) and an inner surface facing towards the limit finger, which inner surface is adapted to co-operate with said limit finger by coming into abutment therewith to limit relative movements between the first and second strength members (2, 3) along said first axis (Z) and along a third axis (Y) perpendicular to the first and second axes (Z, X), the first strength member (2) having at least one support member (11) presenting a bearing face (11a) looking substantially along the first axis (Z) towards the limit finger (9), and the rigid cage (14) of the second strength member being interposed between said bearing face and the limit finger; and
· an elastomer link device (4) connecting the outer surface of the rigid cage (14) to the bearing surface (11a) of the support member (11), the elastomer link device being adapted to support said permanent axial load, and said elastomer link device (4) having two arms (12) which extend along the first axis (Z) from the second strength member and which diverge along the third axis (Y) until they reach the first strength member;
the support being **characterized in that** the two arms (12) of the elastomer link device are connected respectively to two distinct support fingers (11) belonging to the first strength member, said support fingers being disposed longitudinally parallel to the second axis (X) and being offset on either side of the limit finger (9), the support fingers (11) and the limit finger (9) being formed as a single piece.

2. An antivibration support according to claim 1, in which the second strength member (3) is in the form of a central arch (14) extended laterally outwards by two fixing tabs (15) for fixing to the second rigid element (17), the central arch (14) surrounding the limit finger (9) in part.

3. An antivibration support according to claim 1 or claim 2, in which the limit finger (9) includes an elastomer coating (10).

4. An antivibration support according to any preceding claim, in which the first strength member (2) is a light alloy casting.

5. An antivibration support according to any preceding claim, in which the first strength member (2) has a body (5) provided with fixing means (8) suitable for enabling said body (5) to be fixed to the first rigid element (6), the support fingers (11) and the limit finger (9) being formed integrally with said body (5).

6. A motor vehicle comprising bodywork (17) connected to an engine unit (6) at least via an antivibration support (1) according to any preceding claim, a first element (6) selected from the engine unit and the bodywork being fixed to the first strength member, and a second element (17) selected from the engine unit and the bodywork being fixed to the second strength member.

7. A vehicle according to claim 6, in which the second strength member has a central arch (14) which is extended laterally outwards by two fixing tabs (15) each fixed to the second element (17), the limit finger (9) being adapted to co-operate with both the central arch (14) and said second element (17) by coming into abutment therewith so as to limit relative movements between the first and second strength members parallel to the first and third axes (Z, Y).
